# EUROPÄISCHE PATENTSCHRIFT

(11) **EP 2 217 039 B1**
(45) Veröffentlichungstag und Bekanntmachung des Hinweises auf die Patenterteilung: **22.01.2014**
(21) Anmeldenummer: 09001785.6
(22) Anmeldetag: 09.02.2009
(51) Int. Cl.: H05B 33/08

(54) **Verfahren zum pulsweitenmodulierten Ansteuern mehrer elektrischer Verbraucher**
Method for pulse-width modulated control of multiple electrical consumers
Procédé de commande à largeurs d'impulsions modulées de plusieurs consommateurs électriques

(43) Veröffentlichungstag der Anmeldung: 11.08.2010
(73) Patentinhaber: Delphi Technologies, Inc., Troy MI 48007 (US)
(72) Erfinder: Langenbach, Julia, 57482 Wenden (DE)
(74) Vertreter: Robert, Vincent

(56) Entgegenhaltungen:
- US-A1- 2004 001 039
- US-A1- 2008 202 312
- US-A1- 2008 278 097

## Beschreibung

Die vorliegende Erfindung betrifft ein Verfahren zum pulsweitenmodulierten Ansteuern mehrerer elektrischer Verbraucher.

Grundsätzlich ist es bekannt, einen oder mehrere elektrische Verbraucher pulsweitenmoduliert, d.h. mittels Pulsweitenmodulation (PWM), anzusteuern.

Hierbei wird die Betriebszeit der Verbraucher in Tastperioden unterteilt, welche unmittelbar aufeinanderfolgende Zeiträume mit konstanter Länge darstellen. Die konstante Länge der Tastperioden wird durch die Periodendauer der PWM vorgegeben, welche der inversen Grundfrequenz der PWM entspricht. Innerhalb jeder Tastperiode wird jeder Verbraucher für eine einem Tastverhältnis, das dem jeweiligen Verbraucher für diese bestimmte Tastperiode zugeordnet ist, entsprechende Einschaltdauer eingeschaltet.

Das Tastverhältnis ist als das Verhältnis von Einschaltdauer des Verbrauchers während der Tastperiode zu der Summe aus Einschaltdauer und Ausschaltdauer des Verbrauchers während der Tastperiode definiert, wobei die Summe aus Einschaltdauer und Ausschaltdauer des Verbrauchers gleich der Periodendauer der PWM ist. Mögliche Werte für das Tastverhältnis eines Verbrauchers liegen somit im Bereich zwischen 0 und 1.

Bei einem Betreiben mehrerer elektrischer Verbraucher mittels PWM werden herkömmlicherweise alle einzuschaltenden Verbraucher zu Beginn der Tastperiode eingeschaltet und entsprechend ihrem Tastverhältnis im Verlauf der Tastperiode wieder ausgeschaltet.

Hierbei besteht das Problem, dass sich die Anzahl der zu einem bestimmten Zeitpunkt ein- bzw. ausgeschalteten Verbraucher in sehr kurzer Zeit sehr stark ändern kann, beispielsweise wenn am Anfang einer Tastperiode mehrere Verbraucher eingeschaltet werden, ohne dass gleichzeitig Verbraucher ausgeschaltet werden. Solche Sprünge im Zeitverlauf der Anzahl von gleichzeitig eingeschalteten bzw. ausgeschalteten Verbrauchern können eine entsprechend steile Zunahme bzw. Abnahme des durch die Verbraucher fließenden Gesamtstroms bzw. des durch eine die Verbraucher versorgende Stromquelle fließenden Stroms bewirken.

Derartige Änderungen im Stromverlauf sind insbesondere deshalb nachteilig, da sie zu einer verringerten elektromagnetischen Verträglichkeit (EMV) der die Verbraucher und die Stromquelle umfassenden Schaltung und zur Überlastung von Komponenten der Schaltung sowie deren Beschädigung führen können.

Aus US 2008/0202312 A1 ist ein Verfahren gemäß dem Oberbegriff des Anspruchs 1 bekannt. US 2008/0278097 A1 und US 2004/0001039 A1 offenbaren jeweils ähnliche Verfahren.

Der Erfindung liegt daher die Aufgabe zugrunde, ein Verfahren zum pulsweitenmodulierten Ansteuern mehrerer elektrischer Verbraucher zu schaffen, welches eine Überlastung oder Beschädigung von Komponenten der Schaltung vermeidet und eine unverminderte elektromagnetische Verträglichkeit der Schaltung sicherstellt.

Zur Lösung dieser Aufgabe ist ein Verfahren mit den Merkmalen des Anspruchs 1 vorgesehen.

Gemäß Anspruch 1 umfasst ein erfindungsgemäßes Verfahren zum pulsweitenmodulierten Ansteuern mehrerer elektrischer Verbraucher, dass jeder Verbraucher während einer Tastperiode gemäß einem vorgegebenen Tastverhältnis für einen zusammenhängenden Zeitraum eingeschaltet bzw. ausgeschaltet wird und dass die Ein- und Ausschaltzeitpunkte von Verbrauchern, deren Tastverhältnis für die jeweilige Tastperiode weder 0 noch 1 ist, innerhalb der Tastperiode in Abhängigkeit von den Tastverhältnissen aller Verbraucher so gewählt werden, dass zu jedem Zeitpunkt der Betrag der Differenz zwischen der Anzahl von Einschaltvorgängen und der Anzahl von Ausschaltvorgängen minimal ist.

Minimal bedeutet hier, dass der Betrag der Differenz zwischen der Anzahl von Einschaltvorgängen und der Anzahl von Ausschaltvorgängen in der Regel zu jedem Zeitpunkt innerhalb einer Tastperiode deutlich kleiner als die Anzahl der Verbraucher ist.

Der Erfindung liegt der allgemeine Gedanke zugrunde, zu einem bestimmten Zeitpunkt nach Möglichkeit immer nur einen Verbraucher ein- oder auszuschalten, und, falls mehrere Verbraucher gleichzeitig ein- oder ausgeschaltet werden, zum selben Zeitpunkt möglichst eine identische Anzahl von Verbrauchern aus- bzw. einzuschalten.

Durch diese Wahl der Ein- und Ausschaltzeitpunkte von Verbrauchern mit Tastverhältnis ungleich 0 oder 1 wird erreicht, dass der Zeitverlauf der Anzahl von gleichzeitig eingeschalteten Verbrauchern nur minimale Sprünge aufweist und somit einen annäherungsweise kontinuierlichen Verlauf annimmt.

Dadurch wird erreicht, dass auch der Zeitverlauf des durch die Verbraucher fließenden Gesamtstromes nur entsprechend minimal steile Zu- oder Abnahmen aufweist und somit einen flacheren Verlauf annimmt.

Das erfindungsgemäße Verfahren eignet sich beispielsweise zur pulsweitenmodulierten Ansteuerung von mehreren Leuchtdioden (LEDs) als elektrische Verbraucher, wobei die PWM der selektiven Einstellbarkeit der Helligkeit jeder einzelnen LED dient.

Ist die Grundfrequenz einer PWM zur Ansteuerung mehrerer LEDs hoch genug (z.B. mehrere 100kHz), so sind die sich ergebenden Tastperioden so kurz, dass ein Beobachter keine diskreten Ein- und Ausschaltvorgänge mehr wahrnimmt, wenn die LEDs durch die PWM innerhalb einer Tastperiode ein- und ausgeschaltet werden. Die durch einen Beobachter empfundene Helligkeit der LEDs ist dabei von der von den LEDs im zeitlichen Mittel abgegebenen Lichtleistung und somit direkt von dem Tastverhältnis der LEDs abhängig.

Die selektive Einstellung der Helligkeit der LEDs kann beispielsweise in einem mehrere LEDs aufweisenden KFZ-Scheinwerfer von Nutzen sein. In diesem Fall können durch die pulsweitenmodulierte Ansteuerung zum Beispiel unterschiedliche Helligkeiten entsprechend einem Betrieb des Scheinwerfers in einem Fern-, Abblend- oder Standlichtmodus realisiert werden. Zusätzlich ist es möglich, zum Beispiel im Falle eines entgegenkommenden Fahrzeuges ausgewählte LEDs in ihrer Helligkeit so zu reduzieren, dass ein Blenden des Fahrers des entgegen kommenden Fahrzeugs vermieden wird, während die LEDs, die die übrige Fahrzeugumgebung bestrahlen, mit unverminderter Helligkeit betrieben werden können.

Die Helligkeit jeder LED wird hierbei durch die Zuordnung eines entsprechenden Tastverhältnisses eingestellt, sodass während des Betriebes des Schweinwerfers viele unterschiedliche Zuordnungen von Tastverhältnissen zu LEDs auftreten können, die jeweils über einen längeren Zeitraum hinweg gleich bleiben können oder sich, z.B. im Fall eines entsprechenden Ereignisses wie eines entgegen kommenden Fahrzeugs, von einer Tastperiode zur nächsten ändern können.

Eine diesem Anwendungsbeispiel zugrunde liegende Vorrichtung kann beispielsweise aus mehreren elektrisch in Serie geschalteten LEDs bestehen, die durch eine gemeinsame Stromquelle mit Strom versorgt werden und die jeweils durch einen Überbrückungsstrompfad einzeln elektrisch überbrückbar sind. Eine vorgesehene PWM-Ansteuerung kann dann jede LED durch Schließen des Überbrückungsstrompfades im Wesentlichen kurzschließen und damit ausschalten bzw. durch Öffnen des Überbrückungsstrompfades einschalten.

Da die LEDs bei dieser beispielhaften Vorrichtung elektrisch in Serie geschaltet sind, führt die Verringerung des Spannungsabfalls über eine LED, die überbrückt wird, dazu, dass über die nicht überbrückten LEDs eine entsprechend erhöhte Spannung abfällt und der durch diese LEDs fließende Strom zunimmt. Herkömmlicherweise würde ein gleichzeitiges Ein- und Ausschalten mehrerer LEDs durch die PWM-Ansteuerung deshalb in einer entsprechend steilen Zunahme bzw. Abnahme des durch die nicht überbrückten LEDs fließenden Stromes bzw. des von der Stromquelle gelieferten Stromes resultieren, wodurch die Stromquelle oder die LEDs oder andere Komponenten belastet würden und die elektromagnetische Verträglichkeit (EMV) der Gesamtanordnung leiden würde.

Das erfindungsgemäße Verfahren trägt in vorteilhafter Weise dazu bei, Steilheiten im Zeitverlauf des durch die LEDs fließenden Stromes zu vermeiden bzw. zu beschränken, indem die LEDs so geschaltet werden, dass zu jedem Zeitpunkt die Differenz-zwischen der Anzahl von Einschaltvorgängen und der Anzahl von Ausschaltvorgängen von LEDs minimal ist, wodurch der fließende Strom einen flacheren Zeitverlauf annimmt.

Es versteht sich, dass die Erfindung nicht auf dieses Anwendungsbeispiel beschränkt ist.

Erfindungsgemäß werden mehrere innerhalb der Tastperiode liegende und einander zumindest teilweise überlappende Zeitfenster definiert. Die Zeitfenster dienen als Hilfsmittel zur Positionierung der Einschaltdauern der Verbraucher innerhalb der Tastperiode, indem jedem Verbraucher ein Zeitfenster so zugeordnet wird, dass die Einschaltdauer des Verbrauchers zumindest teilweise innerhalb des ihm zugeordneten Zeitfensters zeitlich angeordnet ist.

Die Länge der definierten Zeitfenster und ihre zeitliche Anordnung innerhalb der Tastperiode bestimmen, wie die Einschaltdauern von Verbrauchern innerhalb der Tastperiode angeordnet werden. Durch die Definition der Zeitfenster wird in etwa der Zeitverlauf der Anzahl von gleichzeitig eingeschalteten Verbrauchern innerhalb der Tastperiode vorgegeben.

Vorteilhafte Ausführungsformen der Erfindung sind den Unteransprüchen, der Beschreibung und den Zeichnungen zu entnehmen.

Gemäß einer vorteilhaften Ausführungsform werden die Zeitfenster unterschiedlich lang gewählt. Dadurch lassen sich bei geeigneter Anordnung der Zeitfenster unterschiedliche Beginn- und Endzeitpunkte aller Zeitfenster sicherstellen. Durch unterschiedliche Beginn- und Endzeitpunkte aller Zeitfenster wird erreicht, dass die Verbraucher in der Regel zeitlich gegeneinander versetzt eingeschaltet werden und zeitlich gegeneinander versetzt ausgeschaltet werden.

Besonders bevorzugt ist es, wenn jedes der Zeitfenster innerhalb der Tastperiode zentriert angeordnet wird. Dadurch ist sichergestellt, dass der Beginn und das Ende zweier unterschiedlich langer Zeitfenster nicht zusammenfallen. Wenn alle Zeitfenster unterschiedlich lang sind, ist somit sichergestellt, dass alle Zeitfenster zu unterschiedlichen Zeitpunkten beginnen und enden. Zudem werden die zeitlichen Versetzungen zwischen den Zeitpunkten des Beginns und des Endes aller Zeitfenster symmetrisch aufgeteilt. Das bedeutet, dass der zeitliche Abstand zwischen dem Beginn eines Zeitfensters und dem Beginn eines anderen Zeitfensters so groß ist wie der zeitliche Abstand zwischen dem Ende des einen Zeitfensters und dem Ende des anderen Zeitfensters.

Nach einer weiteren vorteilhaften Ausführungsform werden die Zeitfenster entsprechend ihrer Länge sortiert, beginnend mit dem längsten Zeitfenster als erstem Zeitfenster. Eine solche Sortierung erlaubt eine besonders systematische Zuordnung der Verbraucher zu den Zeitfenstern.

Erfindungsgemäß werden die Verbraucher entsprechend ihrem Tastverhältnis sortiert, beginnend mit einem Verbraucher, der ein maximales Tastverhältnis aufweist, als erstem Verbraucher.

Besonders bevorzugt ist es, wenn die Verbraucher gemäß ihren Tastverhältnissen den Zeitfenstern so zugeordnet werden, das zu jedem Zeitpunkt innerhalb eines Zeitfensters maximal ein diesem Zeitfenster zugeordneter Verbraucher eingeschaltet ist. Wenn mehrere Verbraucher demselben Zeitfenster zugeordnet werden, werden diese Verbraucher mit anderen Worten so geschaltet, dass ein dem Zeitfenster zugeordneter Verbraucher jeweils in einer Tastlücke aller anderen diesem Zeitfenster zugeordneten Verbraucher eingeschaltet ist. Ein und demselben Zeitfenster zugeordnete Verbraucher werden also nicht gleichzeitig, sondern zeitlich nacheinander betrieben.

Eine weitere vorteilhafte Ausführungsform sieht vor, dass die Verbraucher so auf die Zeitfenster verteilt werden, dass entweder der Beginn einer Einschaltdauer eines Verbrauchers mit dem Beginn des Zeitfensters, dem der Verbraucher zugeordnet ist, oder das Ende der Einschaltdauer eines Verbrauchers mit dem Ende des Zeitfensters, dem der Verbraucher zugeordnet ist, zusammenfällt. Die Einschaltdauer eines einem Zeitfenster zugeordneten Verbrauchers wird also entweder rechtsbündig mit dem Ende des Zeitfensters oder linksbündig mit dem Beginn des Zeitfensters angeordnet.

Besonders bevorzugt ist es, wenn von Zeitfenster zu Zeitfenster fortschreitend zwischen rechtsbündiger Anordnung der Einschaltdauer eines Verbrauchers mit einem Zeitfenster und linksbündiger Anordnung der Einschaltdauer eines anderen Verbrauchers mit einem nächsten Zeitfenster abgewechselt wird.

Hierdurch wird erreicht, dass die Zeitfenster besonders lückenlos mit Einschaltdauern von Verbrauchern "aufgefüllt" werden. Durch ein Abwechseln von rechtsbündiger und linksbündiger Anordnung gemäß der oben beschriebenen Vorgehensweise werden die Einschalt- bzw. Ausschaltzeitpunkte der unterschiedlichen Verbraucher zeitlich auseinandergezogen.

Ferner bevorzugt ist es, wenn die beispielsweise nach abnehmendem Tastverhältnis sortierten Verbraucher der Reihe nach auf die beispielsweise nach abnehmender Länge sortierten Zeitfenster aufgeteilt bzw. den sortierten Zeitfenstern zugeordnet werden.

Das bedeutet, dass die Verbraucher der Reihe nach von größeren zu kleineren Tastverhältnissen fortschreitend den Zeitfenstern zugeordnet werden, wobei größeren Zeitfenstern früher ein Verbraucher zugeordnet wird als kleineren Zeitfenstern.

Gemäß einer weiteren Ausführungsform ist vorgesehen, dass, wenn der nach der Zuordnung eines Verbrauchers zu einem Zeitfenster in dem Zeitfenster freibleibende Teil des Zeitfensters nicht ausreichend groß ist, um die Einschaltdauer des nächsten zuzuordnenden Verbrauchers vollständig aufzunehmen, dieser Verbraucher dem nachfolgenden Zeitfenster zugeordnet wird.

Gemäß noch einer weiteren Ausführungsform wird ein Verbraucher mit kleinerem Tastverhältnis einem Zeitfenster zugeordnet, dem bereits ein Verbraucher mit größerem Tastverhältnis zugeordnet ist, wenn der noch verbleibende Teil des Zeitfensters ausreichend groß ist, um die Einschaltdauer des Verbrauchers mit dem kleineren Tastverhältnis vollständig aufzunehmen.

Es wird also vor der Zuordnung eines weiteren Verbrauchers gewissermaßen überprüft, ob innerhalb eines Zeitfensters, dem bereits ein Verbraucher zugeordnet ist, noch Platz für den weiteren Verbraucher ist. Ist dies der Fall, wird der weitere Verbraucher dem Zeitfenster zugeordnet. Ist dies nicht der Fall, wird der weitere Verbraucher dem nächstfolgenden freien Zeitfenster zugeordnet, d.h. dem Zeitfenster, dem noch kein Verbraucher zugeordnet ist. Im Falle einer Sortierung der Zeitfenster nach abnehmender Länge wäre dies das das nächst kleinere freie Zeitfenster.

Gemäß noch einer weiteren Ausführungsform ist vorgesehen, dass, wenn mehrere Verbraucher einem Zeitfenster zugeordnet werden, diese derart innerhalb des Zeitfensters geschaltet werden, dass der Ausschaltvorgang eines dieser Verbraucher zeitlich mit dem Einschaltvorgang eines anderen dieser Verbraucher zusammenfällt.

In einem Zeitfenster, dem mehrere Verbraucher zugeordnet werden, werden die Einschaltdauern zweier dieser Verbraucher also aneinander anliegend angeordnet, sodass weder zeitliche Überlappungen noch zeitliche Lücken zwischen den Einschaltdauern dieser Verbraucher bestehen. Vorzugsweise werden, wenn mehrere Verbraucher demselben Zeitfenster zugeordnet werden, die Einschaltdauern aller dieser Verbraucher zeitlich aneinander anliegend angeordnet.

Eine weitere Ausführungsform sieht vor, dass die Einschaltdauer eines Verbrauchers zeitlich verschoben wird, wenn die Einschaltdauer des Verbrauchers um einen Betrag länger ist als das Zeitfenster, dem der Verbraucher zugeordnet wird, welcher Betrag größer ist als der zeitliche Abstand zwischen dem Ende des Zeitfensters und dem Ende der Tastperiode bzw. zwischen dem Beginn der Tastperiode und dem Beginn des Zeitfensters. Insbesondere wird die Einschaltdauer in diesem Fall so verschoben, dass entweder der Beginn der Einschaltdauer dieses Verbrauchers mit dem Beginn der Tastperiode zusammenfällt oder das Ende der Einschaltdauer des Verbrauchers mit dem Ende der Tastperiode zusammenfällt.

Auf diese Weise ist gewährleistet, dass die Einschaltdauer vollständig innerhalb der Tastperiode liegt und entweder das Ende der Ausschaltdauer zeitlich möglichst nahe an dem Ende des Zeitfensters liegt oder der Beginn der Einschaltdauer zeitlich möglichst nahe an dem Beginn des Zeitfensters liegt.

Gemäß dem erfindungsgemäßen Verfahren kann es vorkommen, dass das Ende der Einschaltdauer eines Verbrauchers in einer Tastperiode mit dem Ende dieser Tastperiode zusammenfällt und der Beginn der Einschaltdauer desselben Verbrauchers in der darauf folgenden Tastperiode mit dem Beginn der darauf folgenden Tastperiode zusammenfällt. Formal gesehen würde dies zum Zeitpunkt des Übergangs von der einen zu der darauf folgenden Tastperiode einem gleichzeitigen Aus- bzw. Einschalten dieses Verbrauchers entsprechen. In diesem Sonderfall wird der betreffende Verbraucher so angesteuert, dass er zum Zeitpunkt des Übergangs weder einnoch ausgeschaltet, sondern über diesen Zeitpunkt hinweg eingeschaltet belassen wird.

Weiterer Gegenstand der Erfindung ist außerdem eine Vorrichtung mit den Merkmalen des Anspruchs 13, durch welche sich die voranstehend erläuterten Vorteile entsprechend erreichen lassen.

Nachfolgend wird die vorliegende Erfindung rein beispielhaft anhand einer vorteilhaften Ausführungsform unter Bezugnahme auf die beigefügten Zeichnungen beschrieben. Es zeigen:
- Fig. 1: eine Tastperiode, mehrere Zeitfenster und mehrere Einschaltdauern von Verbrauchern vor der Zuordnung von Verbrauchern und Zeitfenster;
- Fig. 2: eine Tastperiode, mehrere Zeitfenster und mehrere Einschaltdauern von Verbrauchern nach der Zuordnung einiger der Verbraucher zu Zeitfenstern; und
- Fig. 3: eine Tastperiode, mehrere Zeitfenster und mehrere Einschaltdauern von Verbrauchern nach der Zuordnung aller Verbraucher zu Zeitfenstern.

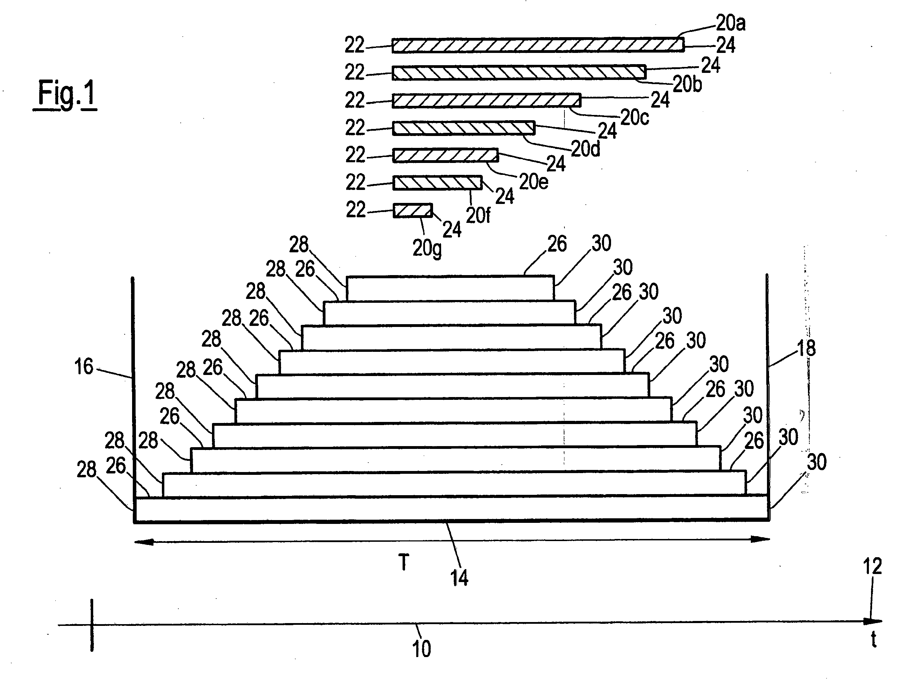

Anhand von Fig. 1 bis 3 wird eine beispielhafte Ausführungsform eines erfindungsgemäßen Verfahrens nun näher erläutert.

Fig. 1 bis 3 zeigen eine Zeitachse 10 mit einer Pfeilspitze, die die Richtung 12 fortschreitender Zeitwerte t symbolisiert. Ferner zeigen die Figuren unterschiedliche Objekte, die durch ihre Lage in Richtung der Zeitachse 10 verschiedene Zeitpunkte bzw. Zeiträume symbolisieren.

So ist eine Tastperiode 14 der dem Verfahren zugrunde liegenden Pulsweitenmodulation (PWM) mit einem Beginn 16 und einem Ende 18 dargestellt, wobei der Zeitraum zwischen Beginn 16 und Ende 18 der Tastperiode 14 der Periodendauer T der PWM entspricht. Die Periodendauer T der PWM steht mit der Grundfrequenz f der PWM in folgender Beziehung: T=1/f.

Zusätzlich sind sieben verschiedene Einschaltdauern 20a-g dargestellt, wobei jede Einschaltdauer 20 zu einem elektrischen Verbraucher gehört, dessen Tastverhältnis für die dargestellte Tastperiode 14 so vorgegeben ist, dass sie jeweils der dargestellten Einschaltdauer 20 entspricht. Jede Einschaltdauer 20 weist einen Beginn 22 bzw. einen Einschaltzeitpunkt des zugehörigen Verbrauchers und ein Ende 24 bzw. einen Ausschaltzeitpunkt des zugehörigen Verbrauchers auf.

Gemäß dem erfindungsgemäßen Verfahren werden innerhalb der Tastperiode 14 mehrere Zeitfenster 26 mit jeweils einem Beginn 28 und einem Ende 30 definiert. Die Zeitfenster 26 liegen vollständig innerhalb der Tastperiode 14 und sind so definiert, dass sie sich gegenseitig teilweise überlappen. Darüber hinaus weisen alle Zeitfenster 26 unterschiedliche Längen auf, wobei die Differenz zwischen der Länge eines Zeitfensters 26 und der Länge des nächst kürzeren Zeitfensters 26 im dargestellten Ausführungsbeispiel für alle Zeitfenster 26 konstant ist. Grundsätzlich ist es jedoch auch möglich, die Zeitfenster so zu definieren, dass diese Differenz nicht für alle Zeitfenster konstant ist.

Die Länge des längsten Zeitfensters 26 ist mit der Länge der Tastperiode 14 identisch. Grundsätzlich ist es jedoch auch möglich, das längste Zeitfenster 26 kürzer als die Tastperiode 14 zu definieren.

Die Zeitfenster 26 werden alle zeitlich zentriert innerhalb der Tastperiode 14 angeordnet, sodass der zeitliche Abstand zwischen dem Beginn 16 der Tastperiode 14 und dem Beginn 28 eines Zeitfensters 26 genau so groß ist wie der zeitliche Abstand zwischen dem Ende 30 desselben Zeitfensters 26 und dem Ende 18 der Tastperiode 14.

Das Verfahren sieht vor, dass die Zeitfenster 26 zunächst entsprechend ihrer Länge sortiert werden. In den Figuren ist diese Sortierung der Zeitfenster 26 durch ihre Anordnung übereinander, d.h. also in der Richtung senkrecht zu der Zeitachse 10 veranschaulicht, wobei das erste und längste Zeitfenster 26 zuunterst liegt. Hierdurch ergibt sich in der in den Figuren gezeigten Darstellung eine pyramidenförmige Anordnung der Zeitfenster 26.

Auch die Verbraucher werden entsprechend der Länge ihrer jeweiligen Einschaltdauer 20, die ihnen für die dargestellte Tastperiode 14 zugeordnet ist, sortiert. In Fig. 1 ist diese Sortierung der noch nicht zugeordneten Verbraucher bzw. ihrer Einschaltdauern 20 durch ihre Anordnung übereinander, d.h. also in der Richtung senkrecht zur Zeitachse 10 veranschaulicht, wobei erste und längste Einschaltdauer 20 zuoberst liegt.

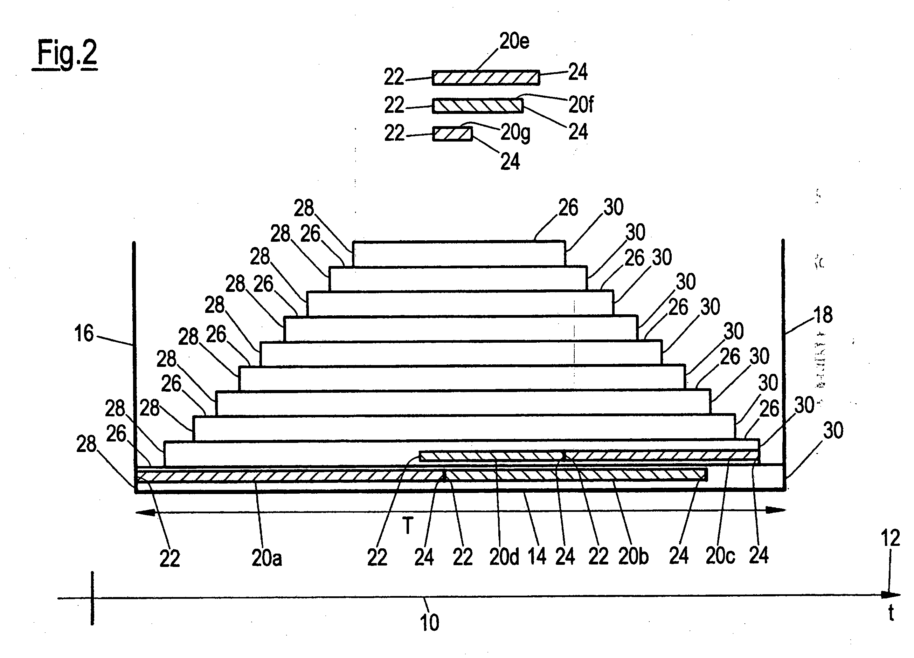

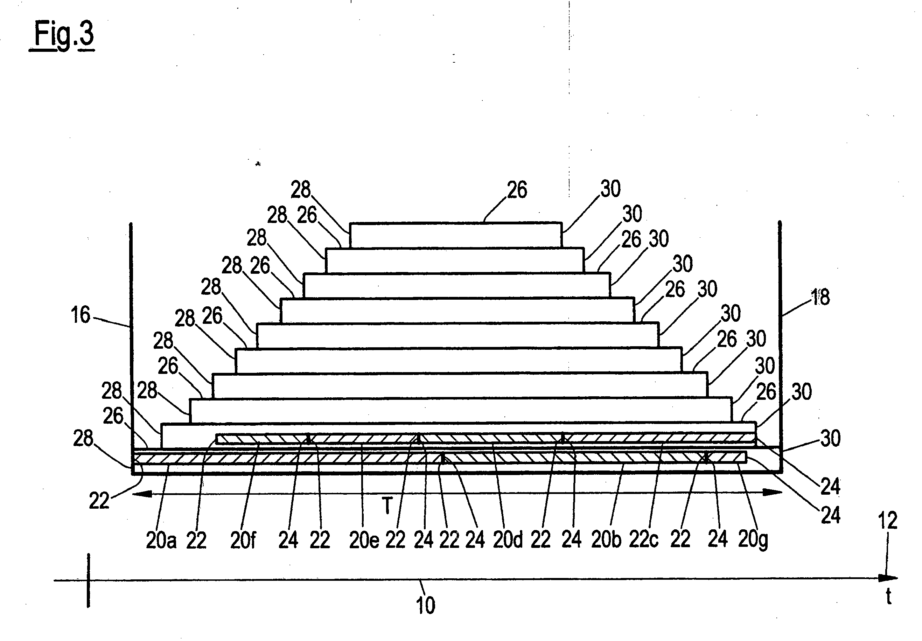

Anschließend werden die sortierten Verbraucher bzw. ihre Einschaltdauern 20 der Reihe nach, also entsprechend der durchgeführten Sortierung, den sortierten Zeitfenstern 26 zugeordnet (Fig. 2 und Fig. 3).

Fig. 1 veranschaulicht das Verfahren zu einem Zeitpunkt, bevor die Verbraucher bzw. ihre Einschaltdauern 20 den Zeitfenstern 26 zugeordnet sind. Fig. 2 veranschaulicht das Verfahren zu einem Zeitpunkt, zu dem die ersten vier Verbraucher bzw. ihre Einschaltdauern 20a-d den Zeitfenstern 26 zugeordnet wurden. Fig. 3 veranschaulicht das Verfahren nach dem Zuordnen aller Verbraucher bzw. ihrer Einschaltdauern 20a-g zu den Zeitfenstern 26.

Die Zuordnung eines Verbrauchers zu einem Zeitfenster 26 wird in Fig. 2 und Fig. 3 jeweils dadurch symbolisiert, dass der die Einschaltdauer 20 des Verbrauchers symbolisierende Balken zumindest teilweise innerhalb des das Zeitfenster 26 symbolisierenden Rechtecks liegt.

Wie in Fig. 2 und 3 gezeigt ist, werden alle Verbraucher den Zeitfenstern 26 so zugeordnet und ihre Einschaltdauern 20 innerhalb des jeweils zugeordneten Zeitfensters 26 so angeordnet, dass zu jedem Zeitpunkt innerhalb eines Zeitfensters 26 maximal ein diesem Zeitfenster 26 zugeordneter Verbraucher eingeschaltet ist.

Bei der Zuordnung von Verbrauchern und Zeitfenstern 26 wird zunächst der erste Verbraucher, d.h. der Verbraucher mit der längsten Einschaltdauer 20a, dem ersten, d.h. also dem längsten, Zeitfenster 26 zugeordnet. Dabei wird der Beginn 22 der Einschaltdauer 20a des ersten Verbrauchers gleich dem Beginn 28 des ersten Zeitfensters 26 gesetzt. Mit anderen Worten wird die erste Einschaltdauer 20a linksbündig in dem ersten Zeitfensters 26 angeordnet.

Nachdem der erste Verbraucher dem ersten Zeitfenster 26 zugeordnet wurde, wird bei der Zuordnung jedes weiteren Verbrauchers bzw. seiner Einschaltdauer 20 wie folgt verfahren:

Zunächst wird überprüft, ob die nächste zuzuordnende Einschaltdauer 20 innerhalb eines Zeitfensters 26, dem bereits ein Verbraucher bzw. eine Einschaltdauer 20 zugeordnet ist, vollständig aufgenommen werden kann, ohne dass sich die zuzuordnende Einschaltdauer 20 mit einer demselben Zeitfenster 26 bereits zugeordneten Einschaltdauer 20 überlappt. Mit anderen Worten wird überprüft, ob der angesichts der einem Zeitfenster 26 bereits zugeordneten Einschaltdauern 20 innerhalb des Zeitfensters 26 freibleibende Zeitraum ausreichend groß ist, um die Einschaltdauer 20 des zuzuordnenden Verbrauchers vollständig aufzunehmen.

Hierbei werden die Zeitfenster 26, denen bereits ein Verbraucher zugeordnet ist, ihrer sortierten Reihenfolge nach überprüft, also beginnend mit dem längsten Zeitfenster 26 und zu kürzeren Zeitfenstern 26 fortschreitend. Wenn festgestellt wird, dass ein überprüftes Zeitfenster 26 die Einschaltdauer 20 wie oben beschrieben vollständig und ohne Überlappung mit einer anderen dem Zeitfenster 26 zugeordneten Einschaltdauer 20 aufnehmen kann, wird der zuzuordnende Verbraucher diesem Zeitfenster 26 zugeordnet und seine Einschaltdauer 20 wird innerhalb des Zeitfensters 26 so angeordnet, dass zu jedem Zeitpunkt innerhalb des Zeitfensters 26 höchstens ein diesem Zeitfenster 26 zugeordneter Verbraucher eingeschaltet ist (Fig. 2 und 3).

Genauer wird die Einschaltdauer 20 so innerhalb des Zeitfensters 26 angeordnet, dass entweder der Beginn 22 der Einschaltdauer 20 mit dem Ende 24 einer anderen diesem Zeitfenster 26 zugeordneten Einschaltdauer 20 zusammenfällt oder das Ende 24 der Einschaltdauer 20 mit dem Beginn 22 einer anderen diesem Zeitfenster 26 zugeordneten Einschaltdauer 20 zusammenfällt, je nachdem ob der erste Verbraucher, der dem Zeitfenster 26 zugeordnet wurde, linksbündig oder rechtsbündig in dem Zeitfenster angeordnet wurde.

Wenn in keinem Zeitfenster 26, dem bereits ein Verbraucher zugeordnet ist, ein ausreichend großer verbleibender Zeitraum vorhanden ist, um die zuzuordnende Einschaltdauer 20 vollständig aufzunehmen, so wird der der Einschaltdauer 20 zugehörige Verbraucher dem größten noch freien Zeitfenster 26 zugeordnet, d.h. dem Zeitfenster 26, dem noch kein Verbraucher zugeordnet ist (Fig. 2).

Dabei werden die Einschaltdauern 20 von Zeitfenster 26 zu Zeitfenster 26 abwechselnd linksbündig und rechtsbündig in dem jeweiligen Zeitfenster 26 angeordnet.

Da die erste Einschaltdauer 20 gemäß dem vorliegenden Ausführungsbeispiel innerhalb des ersten Zeitfensters 26 linksbündig angeordnet wird, folgt, dass die Einschaltdauern 20 in ungeradzahligen Zeitfenstern 26 linksbündig und in geradzahligen Zeitfenstern 26 rechtsbündig angeordnet werden.

In den folgenden Ausnahmefällen wird von der beschriebenen Regel abgewichen:
Der erste Ausnahmefall besteht darin, dass die Regel eine linksbündige Anordnung der Einschaltdauer 20 eines Verbrauchers in einem Zeitfenster 26 vorsieht und dass die Einschaltdauer 20 zu lang ist, um zwischen dem Beginn 28 des Zeitfensters 26 und dem Ende 18 der Tastperiode 14 aufgenommen zu werden. In diesem Ausnahmefall wird die Einschaltdauer 20 gegenüber einer linksbündigen Anordnung zeitlich so verschoben, dass ihr Ende 24 mit dem Ende 18 der Tastperiode 14 zusammenfällt. Anschaulich bedeutet dies, dass die Einschaltdauer 20 nach links verschoben wird, bis sie vollständig innerhalb der Tastperiode 14 liegt.

Entsprechend besteht der zweite Ausnahmefall darin, dass die Regel eine rechtsbündige Anordnung der Einschaltdauer 20 eines Verbrauchers in einem Zeitfenster 26 vorsieht und dass die Einschaltdauer 20 zu lang ist, um zwischen dem Beginn 16 der Tastperiode 14 und dem Ende 30 des Zeitfensters 26 aufgenommen zu werden. In diesem Ausnahmefall wird die Einschaltdauer 20 gegenüber einer rechtsbündigen Anordnung zeitlich so verschoben, dass ihr Beginn 22 mit dem Beginn 16 der Tastperiode 14 zusammenfällt. Anschaulich bedeutet dies, dass die Einschaltdauer 20 so lange nach rechts verschoben wird, bis sie vollständig innerhalb der Tastperiode 14 liegt.

In Fig. 2 sind die ersten vier Verbraucher und ihre jeweiligen Einschaltdauern 20a-d bereits Zeitfenstern 26 zugeordnet. Die Einschaltdauer 20a des ersten Verbrauchers ist dem ersten Zeitfenster 26 zugeordnet und innerhalb dieses ersten Zeitfensters 26 linksbündig angeordnet. Die Einschaltdauer 20b des zweiten Verbrauchers ist ebenfalls dem ersten Zeitfenster 26 zugeordnet, weil sie auch nach der Zuordnung des ersten Verbrauchers noch vollständig in das erste Zeitfenster 26 hinein passt. Die Einschaltdauer 20b des zweiten Verbrauchers ist innerhalb dieses Zeitfensters 26 so angeordnet, dass ihr Beginn 22 mit dem Ende 24 der Einschaltdauer 20a des ersten Verbrauchers zusammenfällt, sodass keine zeitliche Lücke zwischen der ersten Einschaltdauer 20a und der zweiten Einschaltdauer 20b entsteht.

Da die Einschaltdauer 20c des dritten Verbrauchers nach der Zuordnung der ersten Einschaltdauer 20a und der zweiten Einschaltdauer 20b zu dem ersten Zeitfenster 26 nicht mehr in das erste Zeitfenster 26 vollständig hinein passt, ist diese Einschaltdauer 20c dem zweiten Zeitfenster 26 zugeordnet. Gemäß der Regel zur abwechselnden Orientierung der Einschaltdauern 20 in den Zeitfenstern 26 ist diese Einschaltdauer 20c rechtsbündig innerhalb des zweiten Zeitfensters 26 angeordnet.

Die Einschaltdauer 20d des vierten Verbrauchers ist ebenfalls dem zweiten Zeitfenster 26 zugeordnet, weil sie nicht mehr in das erste Zeitfenster hinein passt, aber zusammen mit der Einschaltdauer 20c des dritten Verbrauchers vollständig in das zweite Zeitfenster hinein passt. Die Einschaltdauer 20d des vierten Verbrauchers wird dabei so angeordnet, dass ihr Ende 24 mit dem Beginn 22 der Einschaltdauer 20c des dritten Verbrauchers zusammenfällt.

Weder die Einschaltdauer 20e des fünften Verbrauchers, noch die Einschaltdauer 20f des sechsten Verbrauchers passt in den verbleibenden Zeitraum des ersten Zeitfensters 26. Sie werden deshalb im zweiten Zeitfenster 26 angeordnet

Wie in Fig. 3 gezeigt ist, werden die Einschaltdauern 20e und 20f so in dem zweiten Zeitfenster 26 angeordnet, dass das Ende 24 der Einschaltdauer 20e des fünften Verbrauchers mit dem Beginn 22 der Einschaltdauer 20d des vierten Verbrauchers zusammenfällt und dass das Ende 24 der Einschaltdauer 20f des sechsten Verbrauchers mit dem Beginn 22 der Einschaltdauer 20e des fünften Verbrauchers zusammenfällt.

Die Einschaltdauer 20g des siebten Verbrauchers kann nach der Zuordnung der ersten sechs Verbraucher sowohl im ersten Zeitfenster 26 als auch im zweiten Zeitfenster 26 noch vollständig aufgenommen werden.

Da die Einschaltdauer 20 eines Verbrauchers nach dem vorliegenden Ausführungsbeispiel des Verfahrens immer dem größten Zeitfenster 26, in dem sie noch vollständig aufgenommen werden kann, zugeordnet wird, wird der siebte Verbraucher dem ersten Zeitfenster 26 zugeordnet und seine Einschaltdauer 20g innerhalb dieses Zeitfensters 26 so angeordnet, dass ihr Beginn 22 mit dem Ende 24 der Einschaltdauer 20b des zweiten Verbrauchers zusammenfällt.

Nach der Verteilung aller Verbraucher auf die Zeitfenster 26 und der Anordnung ihrer Einschaltdauern 20 innerhalb der Tastperiode 14 sind die Ein- und Ausschaltzeitpunkte aller Verbraucher so gelegt, dass zu jedem Zeitpunkt der Betrag der Differenz zwischen der Anzahl von Einschaltvorgängen und der Anzahl von Ausschaltvorgängen minimal ist. Der Betrag dieser Differenz nimmt insbesondere zum Zeitpunkt des Ausschaltens des ersten, des zweiten, des vierten, des fünften und des sechsten Verbrauchers den Wert 0 an, da jeweils gleichzeitig der zweite, der siebte, der dritte, der vierte bzw. der fünfte Verbraucher eingeschaltet wird.

Zum Zeitpunkt des Einschaltens des sechsten Verbrauchers sowie zum Zeitpunkt des Ausschaltens des dritten und siebten Verbrauchers nimmt der Betrag der Differenz zwischen der Anzahl von Einschaltvorgängen und der Anzahl von Ausschaltvorgängen den Wert 1 an.

Welchen Betrag die Differenz am Beginn 16 der dargestellten Tastperiode 14 annimmt, hängt davon ab, welche Tastverhältnisse den Verbrauchern in der der dargestellten Tastperiode 14 vorhergehenden Tastperiode zugeordnet waren. In gleicher Weise hängt der Betrag dieser Differenz am Ende 18 der dargestellten Tastperiode 14 davon ab, welche Tastverhältnisse den Verbrauchern in der auf die dargestellte Tastperiode 14 folgenden Tastperioden zugeordnet werden.

Ändert sich die Zuordnung der Tastverhältnisse zu den Verbrauchern zwischen der dargestellten Tastperiode 14 und der vorhergehenden Tastperiode nicht, so nimmt der Betrag der Differenz zwischen der Anzahl von Einschaltvorgängen und der Anzahl von Ausschaltvorgängen am Beginn 16 der dargestellten Tastperiode 14 den Wert 1 an, da die Anzahl der eingeschalteten Verbraucher am Beginn 16 der Tastperiode 14 von 0 auf 1 steigt (Einschalten des ersten Verbrauchers).

### Bezugszeichenliste

- 10: Zeitachse
- 12: Richtung fortschreitender Zeitwerte
- 14: Tastperiode
- 16: Beginn der Tastperiode
- 18: Ende der Tastperiode
- 20: Einschaltdauer
- 22: Beginn einer Einschaltdauer
- 24: Ende einer Einschaltdauer
- 26: Zeitfenster
- 28: Beginn eines Zeitfensters
- 30: Ende eines Zeitfensters

## Patentansprüche

1. Verfahren zum pulsweitenmodulierten Ansteuern mehrerer elektrischer Verbraucher, welches umfasst dass
- jeder Verbraucher während einer Tastperiode (14) gemäß einem vorgegebenen Tastverhältnis für einen zusammenhängenden Zeitraum eingeschaltet bzw. ausgeschaltet wird, und
- die Einschaltzeitpunkte (22) und Ausschaltzeitpunkte (24) von Verbrauchern, deren Tastverhältnis für die jeweilige Tastperiode (14) weder 0 noch 1 ist, innerhalb der Tastperiode (14) in Abhängigkeit von den Tastverhältnissen aller Verbraucher so gewählt werden, dass zu jedem Zeitpunkt der Betrag der Differenz zwischen der Anzahl von Einschaltvorgängen und der Anzahl von Ausschaltvorgängen minimal ist, wobei mehrere innerhalb der Tastperiode (14) liegende und einander zumindest teilweise überlappende Zeitfenster (26) definiert werden,
**dadurch gekennzeichnet,**
**dass** die Verbraucher entsprechend ihres Tastverhältnisses sortiert werden, beginnend mit einem Verbraucher, der ein maximales Tastverhältnis aufweist, als erstem Verbraucher.

2. Verfahren nach Anspruch 1,
**dadurch gekennzeichnet,**
**dass** die Zeitfenster (26) unterschiedlich lang gewählt werden.

3. Verfahren nach Anspruch 1 oder 2,
**dadurch gekennzeichnet,**
**dass** die Differenz zwischen der Länge eines Zeitfensters (26) und der Länge des nächst kürzeren Zeitfensters (26) für alle Zeitfenster (26) konstant gewählt wird.

4. Verfahren nach zumindest einem der Ansprüche 1 bis 3,
**dadurch gekennzeichnet,**
**dass** jedes Zeitfenster (26) innerhalb der Tastperiode (14) zentriert angeordnet wird.

5. Verfahren nach zumindest einem der Ansprüche 1 bis 4,
**dadurch gekennzeichnet,**
**dass** die Zeitfenster (26) entsprechend ihrer Länge sortiert werden, beginnend mit dem längsten Zeitfenster (26) als erstem Zeitfenster (26).

6. Verfahren nach zumindest einem der Ansprüche 1 bis 5,
**dadurch gekennzeichnet,**
**dass** die Verbraucher gemäß ihren Tastverhältnissen den Zeitfenstern (26) so zugeordnet werden, dass zu jedem Zeitpunkt innerhalb eines Zeitfensters (26) maximal ein diesem Zeitfenster (26) zugeordneter Verbraucher eingeschaltet ist.

7. Verfahren nach zumindest einem der Ansprüche 1 bis 6,
**dadurch gekennzeichnet,**
**dass** die Verbraucher so auf die Zeitfenster (26) verteilt werden, dass entweder, und insbesondere abwechselnd, der Beginn (22) einer Einschaltdauer (20) eines Verbrauchers mit dem Beginn (28) eines Zeitfensters (26) oder das Ende (24) einer Einschaltdauer (20) eines Verbrauchers mit dem Ende (30) eines Zeitfensters (26) zusammenfällt.

8. Verfahren nach zumindest einem der Ansprüche 1 bis 7,
**dadurch gekennzeichnet,**
**dass** die sortierten Verbraucher der Reihe nach auf die sortierten Zeitfenster (26) verteilt werden, beginnend mit dem ersten Verbraucher, welcher dem ersten Zeitfenster (26) zugeordnet wird.

9. Verfahren nach zumindest einem der Ansprüche 6 bis 8,
**dadurch gekennzeichnet,**
**dass**, wenn der nach der Zuordnung eines Verbrauchers zu einem Zeitfenster (26) in dem Zeitfenster (26) freibleibende Teil des Zeitfensters (26) nicht ausreichend groß ist, um die Einschaltdauer (20)
des nächsten Verbrauchers vollständig aufzunehmen, dieser Verbraucher dem nachfolgenden Zeitfenster (26) zugeordnet wird.

10. Verfahren nach einem der Ansprüche 6 bis 9,
**dadurch gekennzeichnet,**
**dass** ein Verbraucher mit kleinerem Tastverhältnis einem Zeitfenster (26) zugeordnet wird, dem bereits ein Verbraucher mit größerem Tastverhältnis zugeordnet ist, wenn der noch verbleibende Teil des Zeitfensters (26) ausreichend groß ist, um die Einschaltdauer (20) des Verbrauchers mit dem kleineren Tastverhältnis vollständig aufzunehmen.

11. Verfahren nach einem der Ansprüche 6 bis 10,
**dadurch gekennzeichnet,**
**dass**, wenn mehrere Verbraucher einem Zeitfenster (26) zugeordnet werden, diese derart innerhalb des Zeitfensters (26) geschaltet werden, dass der Ausschaltvorgang eines Verbrauchers mit dem Einschaltvorgang eines anderen Verbrauchers zusammenfällt.

12. Verfahren nach einem der Ansprüche 6 bis 11,
**dadurch gekennzeichnet,**
**dass**, wenn die Einschaltdauer (20) eines Verbrauchers um einen Betrag länger als das dem Verbraucher zugeordnete Zeitfenster (26) ist, welcher größer ist als der zeitliche Abstand zwischen dem Beginn (28) des Zeitfensters (26) und dem Beginn (16) der Tastperiode (14) bzw. zwischen dem Ende (30) des Zeitfensters (26) und dem Ende (18) der Tastperiode (14), die Lage der Einschaltdauer (20) des Verbrauchers so verschoben wird, dass der Beginn (22) der Einschaltdauer (20) dieses Verbrauchers mit dem Beginn (16) der Tastperiode (14) zusammenfällt oder das Ende (24) der Einschaltdauer (20) des Verbrauchers mit dem Ende (18) der Tastperiode (14) zusammenfällt.

13. Vorrichtung mit mehreren elektrischen Verbrauchern und einer Steuereinheit, die zum Ansteuern der Verbraucher gemäß dem Verfahren nach einem der voranstehenden Ansprüche ausgebildet ist.

## Claims

1. Method for pulse-width modulated control of a plurality of electrical loads comprising that:
- each load is switched on or off during a sampling period (14) according to a predetermined duty cycle for a continuous time period, and
- the switch-on time points (22) and switch-off time points (24) of loads whose duty cycle for the respective sampling period (14) is neither 0 nor 1 are selected within the sampling period (14) depending on the duty cycles of all loads so that the absolute value of the difference between the number of switch-on processes and the number of switch-off processes is minimal at any time point, wherein a plurality of time windows (26) within the sampling period (14) and at least partially overlapping is defined,
**characterized in that**
the loads are sorted according to their duty cycle, starting with a load having a maximal duty cycle as the first load.

2. A method according to claim 1,
**characterized in that**
the time windows (26) are selected in varying length.

3. A method according to claim 1 or 2,
**characterized in that**
the difference between the length of a time window (26) and the length of the next shorter time window (26) is selected to be constant for all time windows (26).

4. A method according to at least one of the claims 1 to 3,
**characterized in that**
each time window (26) is disposed centered within the sampling period (14).

5. A method according to at least one of the claims 1 to 4,
**characterized in that**
the time windows (26) are sorted according to their length, starting with the longest time window (26) as the first time window (26).

6. A method according to at least one of the claims 1 to 5,
**characterized in that**
the loads are assigned to the time windows (26) according to their duty cycles so that at any point in time within a time window (26) at maximum one load assigned to said time window (26) is switched on.

7. A method according to at least one of the claims 1 to 6,
**characterized in that**
the loads are distributed to the time windows (26) so that either, and in particular alternately, the beginning (22) of a switch-on period (20) of a load coincides with the beginning (28) of a time window (26) or the end (24) of a switch-on period (20) of a load coincides with the end (30) of a time window (26).

8. A method according to at least one of the claims 1 to 7,
**characterized in that**
the sorted loads are distributed sequentially to the sorted time windows (26), starting with the first load being assigned to the first time window (26).

9. A method according to at least one of the claims 6 to 8,
**characterized in that**,
if after assignment of a load to a time window (26) the remaining free part of the time window (26) in time window (26) is not large enough to fully include the switch-on period (20) of the next load, said load is assigned to the subsequent time window (26).

10. A method according to any one of the claims 6 to 9,
**characterized in that**
a load with a smaller duty cycle is assigned to a time window (26) to which a load with a larger duty cycle is already assigned, if the remaining part of the time window (26) is sufficiently large to fully include the switch-on period (20) of the load with the smaller duty cycle.

11. A method according to any one of the claims 6 to 10,
**characterized in that**,
if a plurality of loads is assigned to a time window (26), these are switched within the time window (26) such that the switch-off process of a load coincides with the switch-on process of another load.

12. A method according to any one of the claims 6 to 11,
**characterized in that**,
if the switch-on period (20) of a load is by an amount longer than the time window (26) assigned to the load, which is greater than the time interval between the beginning (28) of the time window (26) and the beginning (16) of the sampling period (14) or between the end (30) of the time window (26) and the end (18) of the sampling period (14), the position of the switch-on period (20) of the load is shifted so that the beginning (22) of the switch-on period (20) of said load coincides with the beginning (16) of the sampling period (14) or the end (24) of the switch-on period (20) of the load coincides with the end (18) of the sampling period (14).

13. Apparatus having a plurality of electrical loads and a control unit configured for controlling the loads according to the method of any one of the preceding claims.

## Revendications

1. Procédé pour le pilotage avec modulation de largeur d'impulsion de plusieurs consommateurs électriques, qui comprend les étapes consistant à
- mettre en service ou mettre hors service chaque consommateur pendant une période de cycle (14) selon un rapport de cycle prédéterminé pour une période temporelle groupée, et
- choisir les instants de mise en service (22) et les instants de mise hors service (24) de consommateurs dont le rapport de cycle n'est ni égal à zéro ni égal à un pour la période de cycle respective (14), à l'intérieur de la période de cycle (14) en fonction des rapports de cycle de tous les consommateurs de telle façon qu'à tout instant la valeur de la différence entre le nombre d'opérations de mise en service et le nombre d'opérations de mise hors service est minimal, et plusieurs fenêtres temporelles (26) qui se chevauchent mutuellement au moins partiellement et qui tombent à l'intérieur de la période de cycle (14) sont définies,
**caractérisé en ce que**
les consommateurs sont triés en correspondance de leurs rapports de cycle, en commençant par un consommateur qui présente un rapport de cycle maximum, en tant que premier consommateur.

2. Procédé selon la revendication 1,
**caractérisé en ce que** les fenêtres temporelles (26) sont choisies de longueurs différentes.

3. Procédé selon la revendication 1 ou 2,
**caractérisé en ce que** la différence entre la longueur d'une fenêtre temporelle (26) et la longueur de la plus courte fenêtre temporelle suivante (26) est choisie constante pour toutes les fenêtres temporelles (26).

4. Procédé selon l'une au moins des revendications 1 à 3,
**caractérisé en ce que** chaque fenêtre temporelle (26) est agencée de manière centrée à l'intérieur de la période de cycle (14).

5. Procédé selon l'une au moins des revendications 1 à 4,
**caractérisé en ce que** les fenêtres temporelles (26) sont triées selon leur longueur, en commençant par la plus longue fenêtre temporelle (26) à titre de première fenêtre temporelle (26).

6. Procédé selon l'une au moins des revendications 1 à 5,
**caractérisé en ce que** les consommateurs sont associés à des fenêtres temporelles (26) selon leur rapport de cycle, de telle sorte qu'au maximum un consommateur associé à une fenêtre temporelle (26) est mis en service à tout instant à l'intérieur de cette fenêtre temporelle.

7. Procédé selon l'une au moins des revendications 1 à 6,
**caractérisé en ce que** les consommateurs sont répartis sur les fenêtres temporelles (26) de telle façon que soit le commencement (22) d'une période de mise en service (20) d'un consommateur coïncide avec le commencement (28) d'une fenêtre temporelle (26), soit la fin (24) d'une période de mise en service (20) d'un consommateur coïncide avec la fin (30) d'une fenêtre temporelle (26), et en particulier de façon alternative.

8. Procédé selon l'une au moins des revendications 1 à 7,
**caractérisé en ce que** les consommateurs triés de la série sont répartis les uns après les autres sur les fenêtres temporelles triées (26), en commençant avec le premier consommateur qui est associé à la première fenêtre temporelle (26).

9. Procédé selon l'une au moins des revendications 6 a 8,
**caractérisé en ce que** si, après association d'un consommateur avec une fenêtre temporelle (26), la partie de la fenêtre temporelle (26) restant libre dans la fenêtre temporelle (26) n'est pas suffisamment grande pour absorber entièrement la durée de mise en service (20) du consommateur suivant, ce consommateur est associé à la fenêtre temporelle successive (26).

10. Procédé selon l'une des revendications 6 à 9,
**caractérisé en ce qu'**un consommateur avec un faible rapport de cycle est associé à une fenêtre temporelle (26) à laquelle est déjà associé un consommateur avec un rapport de cycle plus important si la partie encore restante de la fenêtre temporelle (26) est suffisamment grande pour encaisser entièrement la durée de mise en service (20) du consommateur avec le rapport de cycle plus faible.

11. Procédé selon l'une des revendications 6 à 10,
**caractérisé en ce que**,
quand plusieurs consommateurs sont associés à une fenêtre temporelle (26), ceux-ci sont branchés à l'intérieur de la fenêtre temporelle (26) de telle manière que l'opération de mise hors service d'un consommateur coïncide avec l'opération de mise en service d'un autre consommateur.

12. Procédé selon l'une des revendications 6 à 11,
**caractérisé en ce que**
si la durée de mise en service (20) d'un consommateur est plus longue, d'une certaine valeur, que la fenêtre temporelle (26) associée au consommateur, valeur qui est plus longue que l'écart temporel entre le commencement (28) de la fenêtre temporelle (26) et le commencement (16) de la période de cycle (14), ou entre la fin (30) de la fenêtre temporelle (26) et la fin (18) de la période de cycle (14), on décale la position de la durée de mise en service (20) du consommateur de telle façon que le commencement (22) de la durée de mise en service (20) de ce consommateur coïncide avec le commencement (16) de la période de cycle (14), ou que la fin (24) de la durée de mise en service (20) du consommateur coïncide avec la fin (18) de la période de cycle (14).

13. Appareil comprenant plusieurs consommateurs électriques et une unité de commande qui est réalisée pour piloter les consommateurs selon le procédé de l'une des revendications précédentes.
